# FASCICULE DE BREVET EUROPEEN

(11) **EP 3 875 759 B1**
(45) Date de publication et mention de la délivrance du brevet: **23.04.2025**
(21) Numéro de dépôt: 21159978.2
(22) Date de dépôt: 01.03.2021
(51) Int. Cl.: F04B 15/02, B67D 7/62, B67D 7/64, F04B 23/02, F03G 1/00, F04B 9/12

(54) **DISPOSITIF ET PROCÉDÉ DE TRANSFERT DE MATIÈRE VISQUEUSE**
VORRICHTUNG UND VERFAHREN ZUM FÖRDERN VON VISKOSEM MATERIAL
DEVICE AND METHOD FOR TRANSFERRING VISCOUS MATERIAL

(30) Priorité: 02.03.2020 FR 2002086
(43) Date de publication de la demande: 08.09.2021
(73) Titulaire: Fives Filling & Sealing, 44140 Le Bignon (FR)
(72) Inventeur: PAUD, Pascal, 44140 LE BIGNON (FR); PRAUD, Dominique, 44140 LE BIGNON (FR)
(74) Mandataire: Novagraaf Group

(56) Documents cités:
- DE-B3- 102014 114 374
- FR-A1- 2 601 081
- GB-A- 1 592 799
- US-A- 3 982 669
- US-A- 4 635 820

## Description

### Domaine technique de l'invention

La présente invention concerne le transfert de fluides visqueux à partir d'un fût de stockage, par la mise en forte pression par un plateau suiveur facilitant le transfert dudit fluide visqueux par des moyens de pompage vers une ligne de distribution.

L'invention peut en particulier convenir au transfert de fluides hautement visqueux présentant par exemple une viscosité supérieure à 10000 mPa.s à une température de 20°C, par exemple de la colle ou des matériaux d'étanchéité.

L'invention peut notamment trouver une application dans le domaine de l'automobile pour la dépose de cordons de colle sur la miroiterie et dans tout domaine d'application de matériaux hautement visqueux à haute cadence.

### Etat de la technique

Le document DE 10 204 114374 B3 divulgue un dispositif de mise sous pression d'un fluide visqueux contenu dans un fût. Cependant, le document DE 10 204 114374 B3 ne divulgue pas un système support dans lequel : la potence est montée mobile dans une colonne de guidage ; deux tubes de guidage verticaux sont fixés chacun à la potence par une extrémité inférieure comprenant un moyen de guidage fixe ; et deux tirants présentent chacun une partie supérieure insérée dans l'un des tubes via le moyen de guidage fixe et une partie inférieure à l'extérieure du tube reliée au plateau suiveur. En outre, le document DE 10 204 114374 B3 ne divulgue pas non plus un moyen d'accumulation et de restitution d'énergie dans lequel : un élément de compression est monté sur la partie supérieure d'un tirant ; l'élément élastique est agencé dans le tube entre l'élément de compression et une butée fixe par rapport au tube, ladite butée étant plus proche de l'extrémité inférieure que l'élément de compression ; et des moyens de contrôle aptes à enclencher et à stopper la compression de l'élément élastique par l'élément de compression.

On connaît des documents US 3 982 669 A , FR 2 601 081 A1, GB 1 592 799 A et US 4 635 820 A d'autres dispositifs de mise sous pression d'un fluide visqueux contenu dans un fût.

Le pompage de fluides hautement visqueux est largement répondu en industrie. Par exemple dans le domaine automobile, pour le montage d'éléments de miroiterie, tels que les vitres des voitures, une colle hautement visqueuse est utilisée. Généralement, une unité robotique à bras poly-articulé porte le support à encoller et le déplace sous un système d'extrusion de colle. La colle est alors distribuée sur le support à travers une buse d'extrusion pendant que le support est déplacé selon une trajectoire enregistrée.

Pour chaque support correspond une trajectoire spécifique et une quantité de colle dépendant de la forme et de la dimension du support, de la taille de la section du cordon et de la vitesse de déplacement du support ou de la buse.

Le système de dépose de colle comprend typiquement :
- une station de transfert de colle ;
- une pompe de dosage ;
- des tuyaux d'alimentation ; et
- un système d'extrusion.

La station de transfert comprend généralement une pompe de transfert reliée à un plateau suiveur qui vient exercer une pression sur la colle dans le fût. Le plateau suiveur est généralement déplacé par un système de vérins pneumatiques ou hydrauliques pour exercer cette pression sur la colle. La pompe de transfert extrait la colle du fût de stockage pour alimenter en colle la pompe de dosage qui elle-même alimente le système d'extrusion.

Les stations de transfert actuelles permettent de générer une pression maximale de l'ordre de 20000 N sur la colle dans le fût avec le plateau suiveur. Elles sont adaptées pour des fluides de faible et moyenne viscosité mais pour des fluides à très haute viscosité, la pression exercée par le plateau suiveur ne permet pas le gavage de la pompe de transfert ce qui provoque une rupture du flux de colle dans la ligne de distribution.

Il existe des solutions pneumatiques alimentées en air comprimé pour fournir des efforts de 60000 N. Toutefois, de tels solution présentent d'importants risques en raison de la pression élevée de l'air dans les vérins. De plus, le coût d'exploitation est important en raison de l'utilisation permanente du compresseur d'air.

Il existe également des solutions hydrauliques qui présentent des inconvénients parmi lesquels :
- la nécessité d'un entretien périodique avec un plan de surveillance en raison des risques de fuites d'huile ;
- une utilisation bruyante et coûteuse en raison de la consommation énergétique importante pour conserver la pression constante dans les vérins.

L'invention a donc pour objet de remédier aux problèmes des solutions connues en proposant une station de transfert de fluide permettant d'exercer des pressions suffisantes pour dépoter efficacement des fluides à très haute viscosité et garantissant la sécurité des opérateurs lors de son utilisation et limitant la consommation en énergie.

### Résumé de l'invention

A cet effet, l'invention porte sur un dispositif de mise de mise sous pression d'un fluide visqueux contenu dans un fût présentant une extrémité supérieure ouverte, le dispositif comprend une base agencée pour recevoir le fût et un plateau suiveur mobile verticalement suivant un axe perpendiculaire à ladite base et passant par le centre du fût lorsque celui-ci est sur la base, ledit plateau suiveur :
- est porté par un système support motorisé et est mobile entre une première position à l'extérieur du fût et une deuxième position dans le fût pour exercer une pression sur le fluide visqueux,
- présente les mêmes dimensions que l'ouverture du fût de sort que lorsque le plateau suiveur est dans le fût, son périmètre ferme étanchement le fût,
- présente un orifice de transfert destiné à être relié à un moyen de pompage apte à transférer le fluide sous pression,
le dispositif comprend en outre un moyen élastique d'accumulation et de restitution d'énergie relié au système de support, ledit moyen étant apte à accumuler l'énergie lorsqu'il est compressé sous l'effet de la pression exercée par le système support lorsque la pression du plateau suiveur sur le fluide visqueux est inférieure à un certain seuil prédéterminé et à la restituer au plateau suiveur lorsqu'il est compressé pour maintenir en pression le fluide visqueux pendant que le système support est au repos.

Le système support est dit au repos lorsque ses moyens de motorisation ne sont pas en fonctionnement.

Le système d'accumulation et de restitution d'énergie permet au plateau suiveur d'exercer une pression permanente sur le fluide visqueux sans devoir mettre en marche les moyens de déplacement du plateau suiveur, c'est à dire les moyens de motorisation du système support, à chaque cycle de pompage du fluide. En effet, une fois que le système de stockage d'énergie est chargé, le plateau suiveur continu d'exercer la pression sur le fluide visqueux pendant son transfert et tant que le niveau du fluide dans le fût n'a pas atteint un niveau critique. Le niveau critique peut par exemple correspondre au seuil de pression à partir duquel le transfert du fluide devient difficile ou coupé. Lorsque ce seuil est atteint, les moyens de motorisation du système support se remettent en marche et exerce de nouveau une pression sur le plateau suiveur qui exerce à son tour une pression sur le fluide.

Si le pompage du fluide est arrêté alors que les moyens de motorisation du système support sont en fonctionnement, la pression exercée sur le plateau suiveur est transférée aux moyens de stockage d'énergie pour l'accumuler en vue de sa restitution lorsque les moyens de motorisation du système support sont au repos. Si le pompage du fluide continu, la pression excédentaire exercée par le system support sur le plateau suiveur permet de recharger le moyen de stockage.

Ce système permet d'obtenir une bonne accumulation d'énergie restituable, par exemple de l'ordre de 5000 N sur une plage de fonctionnement de 10 000 à 60 000 N, afin d'éviter un démarrage des moyens de motorisation du système de support à chaque cycle de transfert de fluide.

Le seuil de pression peut être par exemple programmé par un moyen de contrôle ou détecté par une mesure en temps réel ou détecté par un simple moyen de détection mécanique.

Avantageusement, le système d'accumulation et de restitution d'énergie comprend un moyen élastique agencé pour être compressé pour accumuler l'énergie et décompressé pour restituer l'énergie accumulée.

Ceci est un système simple, robuste et facile à mettre en œuvre pour le stockage d'énergie. Ce moyen élastique peut être mis en compression directement par le système support ou via le plateau suiveur lorsque celui-ci est contact avec le fluide. Par la suite, lorsque les moyens de motorisation du système support sont à l'arrêt alors que les moyens de pompage se mettent en marche pour transférer le fluide, l'énergie emmagasinée par le moyen élastique est transférée au plateau suiveur pendant que le moyen élastique est en décompression.

Un tel moyen élastique peut être par exemple un ressort, des rondelles Belleville ou tous autres moyens similaires.

D'autres types de moyens de stockage et de restitution d'énergie sont également possibles.

Selon un exemple qui ne fait pas partie de l'invention, le système support peut par exemple comprendre :
- un socle,
- deux tubes de guidage verticaux fixés chacun au socle par une extrémité inférieure et présentant une extrémité supérieure libre comprenant un moyen de guidage fixe, lesdits tubes de guidage étant espacés par la base,
- deux vis sans fin présentant chacune une partie inférieure insérée dans l'un des tube via le moyen de guidage et une parties supérieure à l'extérieure du tube,
- une poutre supérieure perpendiculaire aux vis sans fin, fixée aux extrémités supérieures des deux vis et comprenant des moyens de mise en rotation desdites vis sans fin,
- une poutre inférieure perpendiculaire aux vis sans fin et reliée au plateau suiveur par deux tirants, ladite poutre inférieure est montée mobile sur la partie supérieure des vis lors de la mise en rotation de celles-ci de sorte à déplacer le plateau suiveur entre la première et la deuxième position.

Le moyen d'accumulation et de restitution d'énergie peut comprendre :
- un élément de compression monté sur la partie inférieure d'une vis,
- un élément élastique agencé dans le tube entre l'élément de compression et une butée fixe par rapport au tube, ladite butée étant plus proche de l'extrémité supérieure que l'élément de compression, et
- des moyens de contrôle aptes à enclencher et à stopper la compression de l'élément élastique par l'élément de compression.

Selon l'invention, le système support comprend :
- une potence montée mobile dans une colonne de guidage,
- deux tubes de guidage verticaux fixés chacun à la potence par une extrémité inférieure comprenant un moyen de guidage fixe,
- deux tirants présentant chacun une partie supérieure insérée dans l'un des tubes via le moyen de guidage fixe et une partie inférieure à l'extérieure du tube reliée au plateau suiveur,
- un moyen de déplacement de la potence dans la colonne de guidage par un mouvement de translation vertical de sorte à déplacer le plateau suiveur entre la première et la deuxième position.

Le moyen d'accumulation et de restitution d'énergie comprend :
- un élément de compression monté sur la partie supérieure d'un tirant,
- un élément élastique agencé dans le tube entre l'élément de compression et une butée fixe par rapport au tube, ladite butée étant plus proche de l'extrémité inférieure que l'élément de compression, et
- des moyens de contrôle aptes à enclencher et à stopper la compression de l'élément élastique par l'élément de compression.

Avantageusement, les moyens de contrôle peuvent comprendre un premier détecteur et un premier repère pour déclencher la mise en accumulation d'énergie et un deuxième détecteur et un deuxième repère pour arrêter l'accumulation d'énergie. De tels moyens de contrôle sont simple à réaliser et peu couteux.

Le premier et/ou deuxième détecteur peut être, par exemple, un capteur de contact disposé sur une couronne support et le repère est un élément de contact, par exemple solidaire de la vise sans fin ou du tirant.

Avantageusement, la base peut comprendre des moyens de fixation de fût, tels que les électroaimants. Ceci assurera une bonne stabilité du fût pendant le pompage et lors du retrait du plateau suiveur.

La station de transfert peut en outre comprendre un dispositif d'empreinte et de bridage. Par exemple, le socle de la station de transfert peut comprendre une contre-empreinte de la taille et de la forme du fond du fût. Cette contre-empreinte permet de positionner et d'assurer le centrage du fût sans contrainte particulière de l'opérateur. Elle permet également d'empêcher la déformation du fond du fût 2 lorsque la pression est exercée par le plateau suiveur et de pouvoir par ce fait limiter la perte de colle dans le fond du fût.

L'invention concerne également une station de transfert de fluide visqueux qui peut comprendre :
- Un dispositif de mise sous pression selon l'invention ; et
- Un moyen de pompage relié à l'orifice du plateau suiveur.

Le moyen de pompage est par exemple une pompe pneumatique, par exemple solidaire avec le plateau suiveur.

L'invention concerne également un système de dépose pour fluide visqueux, tel que de la colle, comprenant :
- une station de transfert de fluide
- une pompe de dosage ; et/ou
- des tuyaux d'alimentation ; et/ou
- un système d'extrusion de fluide.

Avantageusement les moyens de motorisation du système support comprennent un moteur électrique.

L'invention telle que décrite ci-dessus présente en outre les avantages suivants par rapport au systèmes connus :
- un entretien très réduit ;
- une consommation énergétique minimale ;
- plage de réglage pression plateau importante et simple à mettre en œuvre ;
- un très faible bruit généré ;
- un risque de fonctionnement réduit pour l'opérateur : vitesse lente de descente du plateau suiveur ;
- l'accumulation et la restitution d'énergie est fonction de la cadence de production.

En outre, l'invention permet de démarrer l'exploitation du système sans nécessiter une phase préalable d'accumulation d'énergie.

De plus, l'invention permet également :
- un seul système vis sans fin/écrou pour commander le mouvement de translation du plateau suiveur, supprimant la contrainte de synchronisation des deux vis du premier mode de réalisation,
- de placer le moteur assurant le mouvement de translation du plateau suiveur en position basse, ce qui le rend plus accessible pour la maintenance et permet d'alléger la structure,
- un système d'accumulation et de restitution d'énergie indépendant du mécanisme de translation du plateau suiveur ce qui en facilite le montage et la maintenance,
- un encombrement restreint autour du fut.

### Brève description des figures

L'invention sera mieux comprise à la lecture de la description qui va suivre de modes de réalisation, donnés à titre d'exemples illustratifs, non limitatifs, en relation avec les dessins annexés parmi lesquelles :
[Fig 1] la figure 1 est une vue d'ensemble d'une station de transfert de fluides visqueux selon un example qui ne fait pas partie de l'invention;
[Fig 2] la figure 2 est une vue d'un ensemble plateau suiveur selon l'exemple de la figure 1 sur lequel est montée une pompe pneumatique ;
[Fig 3] la figure 3 représente une vue en coupe longitudinale illustrant le système d'accumulation et de restitution d'énergie selon l'exemple de la figure 1 ;
[Fig 4] la figure 4 représente une vue zoomée sur le système de contrôle de l'accumulation et restitution d'énergie selon l'exemple de la figure 1 ;
[Fig 5] la figure 5 est une vue en coupe de la vue de la figure 4 ;
[Fig 6] la figure 6 est une vue d'ensemble d'une station de transfert de fluides visqueux, dans une première position, selon l'invention ;
[Fig 7] la figure 7 est une vue de détaille d'un tube de guidage de la station de transfert de fluides visqueux de la figure 6 ;
[Fig 8] la figure 7 est une vue d'ensemble de la station de transfert de fluides visqueux de la figure 6, dans une seconde position.

### Description détaillée

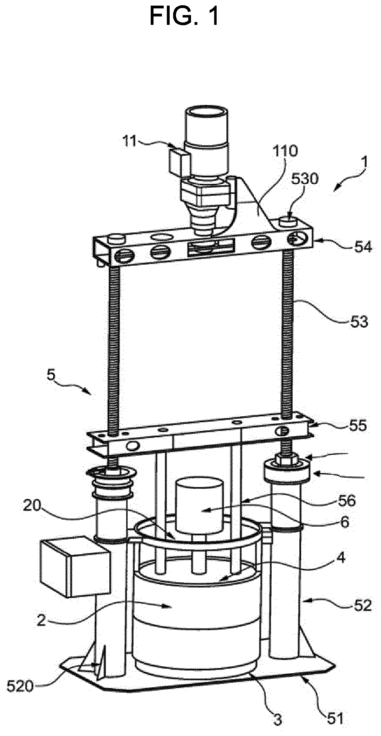

La figure 1 représente une station de transfert de fluide visqueux, par exemple de la colle, selon un exemple qui ne fait pas partie de l'invention. La station de transfert, également appelée station de pompage, telle que représentée en figure 1, comprend un dispositif 1 de mise sous pression et des moyens de pompage 6.

Le dispositif 1 de mise en pression comporte un plateau suiveur 4 porté par un système support 5. Ledit système support 5 comprend :
- un socle 51,
- deux tubes de guidage 52 verticaux fixés chacun au socle 51 par une extrémité inférieure 520 et présentant une extrémité supérieure 521 libre comprenant un moyen de guidage 522 fixe, lesdits tubes de guidage étant espacés par une base 3,
- deux vis 53 sans fin présentant chacune une partie inférieure 531 insérée dans l'un des tube de guidage 52 via le moyen de guidage 522 et une parties supérieure 532 à l'extérieure du tube 52,
- une poutre supérieure 54 perpendiculaire aux vis sans fin 53, fixée aux extrémités supérieures 530 des deux vis 53 et comprenant des moyens de mise en rotation desdites vis sans fin 53,
- une poutre inférieure 55 perpendiculaire aux vis sans fin 53 et reliée au plateau suiveur 4 par deux tirants 56, ladite poutre inférieure 55 est montée mobile sur la partie supérieure des vis 53 lors de la mise en rotation de celles-ci de sorte à déplacer le plateau suiveur 4.

La poutre supérieure 54, est une poutre de motorisation, et la poutre inférieure 55 mobile est également appelée poutre ascenseur. La poutre ascenseur 55, supportant le plateau suiveur 4, est montée mobile sur les deux vis sans fin 53 verticales, par exemple de type trapézoïdale (TRAP).

Les deux vis 53 sans fin ont un prolongement 531 axial selon leur longueur à l'intérieur des tubes 52 de guidage. Dans cet exemple de réalisation, une vis 53 sans fin et son prolongement axial forment une seule pièce. Un prolongement 531 axial prend la forme d'un cylindre non fileté, à l'exception de son extrémité inférieure laquelle est filetée pour recevoir un écrou d'arrêt 71. Un prolongement 531 axial est guidé à l'intérieur d'un tube 52 de guidage par un moyen de guidage 522 sur la partie haute du tube 52 et par une bague 70 de guidage inférieure dans la partie basse du tube.

Les deux vis 53 sont maintenues à leurs bases par les deux tubes de guidage 52 fixés sur le socle 51 et à leurs extrémités supérieures par la poutre de motorisation 54. Elles sont mises en rotation simultanément par un système de transmission connecté à leurs extrémités supérieures. Le système de transmission est actionné par un moteur électrique 11 fixé sur la poutre de motorisation 54. Le système de transmission et le moteur 11 est un exemple de système de motorisation.

Un fût 2 comprenant de la colle à transférer par le moyen de pompage 6, est placé entre les deux tubes de guidage 52.

Le plateau suiveur 4, solidaire de la poutre ascenseur 55, est déplacé verticalement par la rotation des vis sans fin 53 dans l'axe de l'ouverture 20 du fût 2.

La station de transfert peut en outre comprendre un dispositif d'empreinte et de bridage. Par exemple, le socle 51 de la station de transfert peut comprendre une contre-empreinte de la taille et de la forme du fond du fût 2. Cette contre-empreinte permet de positionner et d'assurer le centrage du fût 2 sans contrainte particulière de l'opérateur. Elle permet également d'empêcher la déformation du fond du fût 2 lorsque la pression est exercée par le plateau suiveur 4 et de pouvoir par ce fait limiter la perte de colle dans le fond du fût.

Par exemple, lorsque le fût est métallique ou comprend une base métallique, des électro-aimants peuvent être disposés sous le socle 51 de la station de transfert au niveau de l'empreinte. Les électro-aimants sont par exemple activés au moment de la remontée du plateau suiveur 4, pour le changement de fût 2. Cela permet d'éviter son élévation par effet ventouse de la colle entre le plateau suiveur et le fond du fût 2. Ce dispositif libère l'opérateur de toute contrainte de verrouillage et déverrouillage d'un bridage mécanique du fût et de risque de chute en cas de mauvais positionnement.

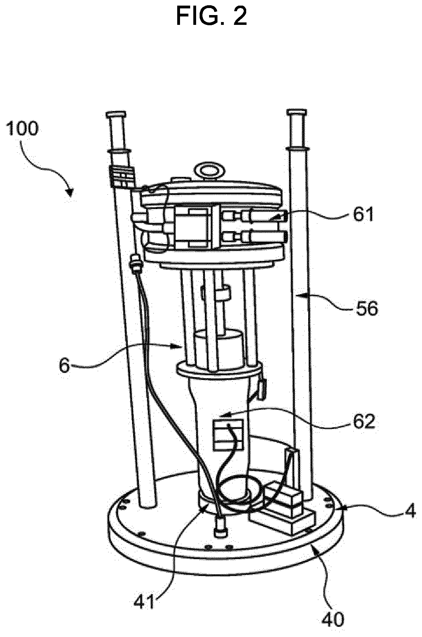

Comme montré par la figure 2, le plateau suiveur 4, la pompe de transfert 62 et le moteur pneumatique 61 peuvent être solidaires. Ils permettent de mettre en pression la colle contenue dans le fût 2 par l'intermédiaire du plateau suiveur 4 et de pomper la colle contenue dans le fût pour la transférer au débit et à la pression désirés vers la pompe de dosage et la ligne de distribution (non illustrées). Le plateau suiveur 4 est fixé solidairement à la poutre ascenseur 55 par deux tirants 56.

Dans d'autres exemples de réalisation, non illustrés, la pompe de transfert peut être dissociée du plateau suiveur 4 mais reliée à l'orifice de transfert 41.

L'effort nécessaire à appliquer sur la colle est déterminé en fonction de la viscosité de la colle utilisée. Cet effort sur la colle permet de faire fluer la colle vers le corps de la pompe de transfert 62 lorsque le moteur 61 de la pompe est en fonctionnement. Lorsque la ligne de distribution (non représentée) est gavée, le moteur pneumatique 61 de la pompe de transfert 62 cale par l'incompressibilité de la colle. La pression générée par ce gavage peut être, par exemple, contrôlée selon une fourchette de pression minimale et de pression maximale.

Le système support 5 de mise en pression permet la descente du plateau suiveur 4 jusqu'au contact de la colle contenu dans le fût, puis sa descente complémentaire au rythme de prélèvement de la colle dans le fût, et la remontée du plateau suiveur 4 lorsque le fût est vide.

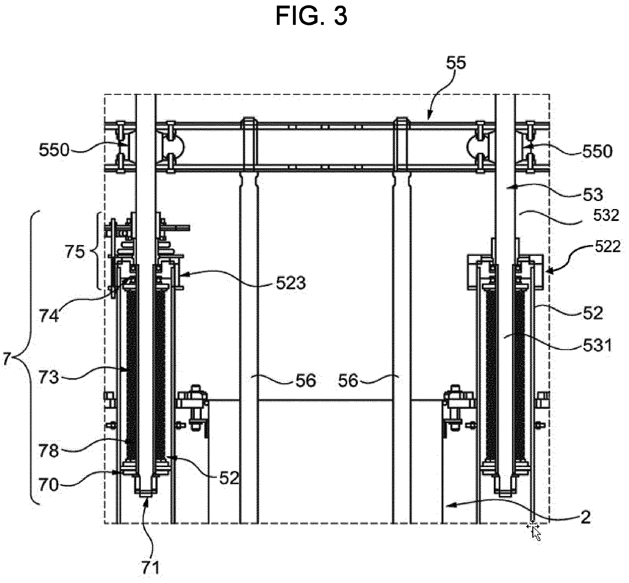

Comme représenté sur la figure 3, la poutre ascenseur 55 sur laquelle sont fixés les tirants 56 de maintien de l'ensemble plateau suiveur / pompe de transfert est mise en mouvement par la mise en rotation des vis trapézoïdales sans fin 53 via des écrous trapézoïdaux 550 correspondants. Les passages des vis 53 sont situés de chaque côté de la poutre ascenseur 55. Les écrous trapézoïdaux 550 sont montés de sorte à pouvoir absorber d'éventuels désalignements des vis 53 et sont associés à un mécanisme d'anti-rotation par rapport à la poutre 55. La poutre ascenseur 55 descend et monte horizontalement.

Les extrémités supérieures des vis 53 trapézoïdales sont maintenues et guidés dans la poutre de motorisation 54. Un moteur électrique 11 est fixée sur la poutre de motorisation 54. Les vis 53 sont mises en rotation par le moteur électrique 11, par l'intermédiaire d'un système de transmission, par exemple des roues dentées entrainées par chaînes ou des poulies entrainées par des courroies ou des boitiers à renvois d'angles mécaniques avec entrainement par cardans. Le moteur 11 est associé à un réducteur 110. Le moteur 11 permet de mettre en rotation les vis 53 dans les sens horaire ou antihoraire.

Par exemple, la mise en rotation antihoraire des vis 53 fait descendre la poutre ascenseur 55 avec le plateau suiveur 4 et la pompe de transfert 6. Inversement une rotation horaire fait remonter l'ensemble.

Les tubes de guidages 52 peuvent comprendre chacun un dispositif 7 d'accumulation et de restitution d'énergie. Comme montré par la figure 3, chaque dispositif 7 peut comprendre :
- un élément élastique 73, tel qu'un ressort hélicoïdal, des rondelles Belleville ou des ressorts ondulés,
- un guidage inférieur 70 formant un élément de compression, et
- une butée d'effort de compression à billes 74.

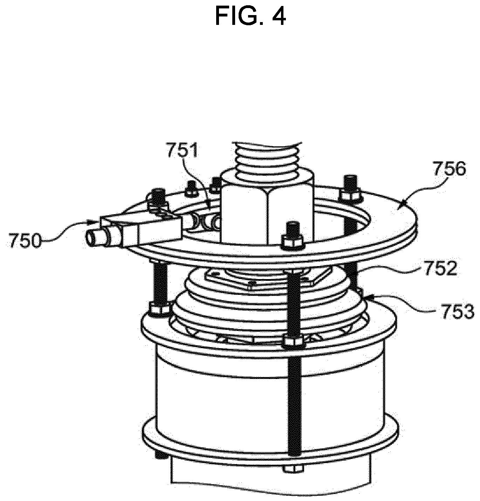

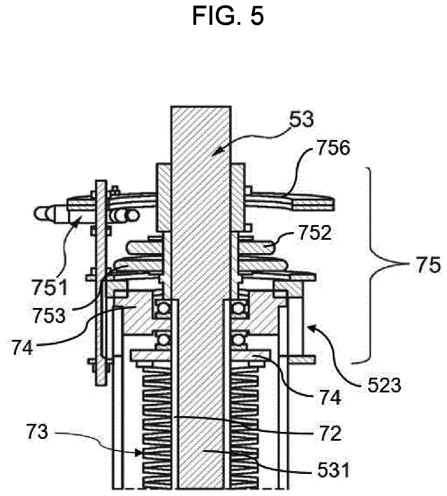

En outre, comme illustré par les figures 4 et 5, le dispositif d'accumulation et de restitution d'énergie peut comprendre des moyens de contrôle 75, qui comprennent par exemple un premier détecteur 750 et un premier repère 752 pour déclencher la mise en accumulation par rotation des vis sans fin. Il peut aussi comprendre un deuxième détecteur 751 et un deuxième repère 753 pour arrêter l'accumulation d'énergie.

Dans l'exemple représenté en figure 3, l'élément compressible 73 comprend des rondelles Belleville guidées autour d'un fourreau 72 disposé autour de la prolongation 531 de la vis sans fin entre la bague de guidage inférieure 70 et la butée à billes 74. Un écrou d'arrêt 71 est monté fixe à l'extrémité basse de la prolongation 531 et sous la bague de guidage 70. Il permet de précontraindre l'élément compressible 73. L'extension 531 est libre à l'intérieur du fourreau 72. Le tube de guidage 52 est fermé par une bague à visser 523 laissant passer librement la vis 53 sans fin trapézoïdale ainsi que la partie haute du fourreau 72 qui est guidé en rotation et translation dans la butée à billes 74. La bague de guidage 70 est montée libre en rotation et en translation dans le tube de guidage 52.

### Initialisation :

Après la mise en place d'un fût 2 neuf, la descente de l'ensemble plateau suiveur 4 / pompe de transfert 6 est déclenché (par un appui opérateur via une commande bimanuelle), provoquant la mise en rotation des vis trapézoïdale et en conséquence la descente du plateau.

Lorsque le plateau suiveur 4 rentre en contact avec le dessus de la colle contenu dans le fût 2, le plateau 4 est stoppé par l'incompressibilité de la colle. L'ensemble plateau 4, tirants 56 et poutre 55 et écrous 550 étant alors devenus statique, les vis trapézoïdales 53 maintenues en rotation provoquent, via les écrous 550, la remontée des vis sans fin 53 et de leurs extensions 531 et par conséquence la mise en compression des rondelles élastiques 73. Cette compression des rondelles Belleville résulte de la translation vers le haut des bagues de guidage inférieures 70 alors que les butées à billes 74 sont bloquées en translation.

Le premier élément de repère 752 (bague « demande accumulation d'énergie ») et le deuxième élément de repère 753, (bague « arrêt accumulation d'énergie ») étant montées fixes par rapport à la vis trapézoïdale 53, ils montent également vers une couronne 756 support des détecteurs 750, 751 de gestion de l'accumulation d'énergie, en partant de la position de repos montrée en figure 4.

### Fonctionnement automatique :

Lorsque la bague 752 « demande d'accumulation d'énergie » passe devant le premier détecteur 750 et rentre en contact électrique avec lui, le système passe en mode accumulation d'énergie « demande accumulation d'énergie », le dispositif est désormais en fonctionnement automatique et les vis trapézoïdales 53 continuent leur rotation.

L'accumulation de l'énergie est continuée jusqu'à ce que la bague 753 « arrêt d'accumulation d'énergie » est détectée par le détecteur 751 « arrêt accumulation d'énergie ». La rotation des vis trapézoïdale est alors stoppée indiquant que la compression de l'élément élastique 73 est à son niveau maximal.

Le transfert de colle depuis le fût vers la ligne de distribution provoque la descente du niveau de colle et en conséquence la descente du plateau suiveur 4. Lors de cette descente la décompression de l'élément élastique 73 restitue l'énergie accumulée pour assurer un maintien sur le fluide de la pression nécessaire au pompage. Cette décompression est accompagnée par la descente des bagues 752, 753 de demande et arrêt de l'accumulation d'énergie. La détection de la bague 753 « demande accumulation » par le détecteur 751 provoque à nouveau la mise en rotation des vis trapézoïdales 53 permettant la re-compression des éléments élastiques.

Les cycles d'accumulation et de restitution d'énergie s'enchainent ainsi jusqu'à l'atteinte de la détection fût vide.

Lorsque le fût est vide la remontée de l'ensemble plateau / pompe est enclenché par l'opérateur par un appui non maintenu sur la commande bimanuelle.

Selon une variante de réalisation, l'étape d'initialisation et /ou l'étape de remontée du plateau suiveur peut être également automatisée.

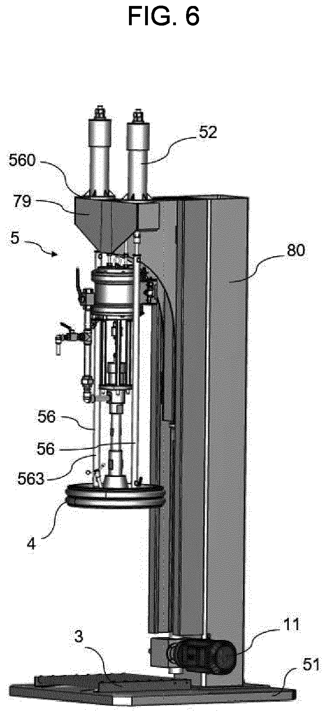

La figure 6 représente une station de transfert de fluide visqueux, par exemple de la colle, selon l'invention.

Dans cet exemple de réalisation, le moyen d'accumulation et de restitution d'énergie est également composé de deux empilements de rondelles Belleville placés dans deux tubes de guidage 52. Les tubes de guidage sont ici placés sur un prolongement 562 des deux tirants 56.

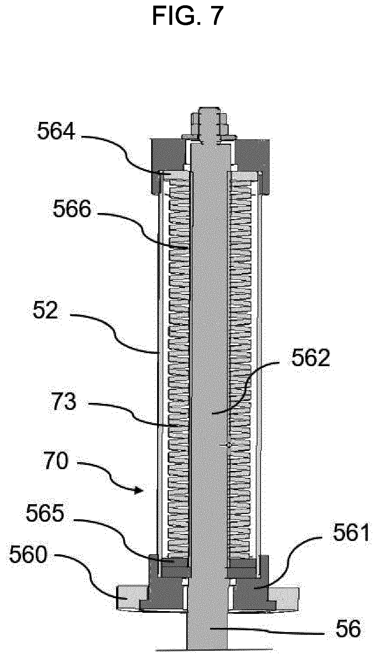

La figure 7 est une vue partielle de la station de transfert de fluide visqueux selon l'invention de la figure 6 montrant une vue en coupe longitudinale d'un tube de guidage 52.

A l'intérieur des tubes de guidage, on retrouve une configuration similaire dans son principe à celle du premier exemple de réalisation. Ainsi, les rondelles Belleville 73 sont placées autour de fourreaux 566 disposés autour des extensions 562 des tirants comme ils l'étaient autour des extensions 531 des vis sans fin dans le premier exemple de réalisation. Cependant, l'orientation des tubes de guidage étant inversée par rapport au premier exemple de réalisation, les bagues de guidage 564 se trouvent ici dans la partie supérieure des tubes et les butées à billes 565 en partie inférieure.

Les tubes de guidage sont fixés sur une potence 79 mobile selon un mouvement de translation vertical sur une colonne 80 de guidage. Le déplacement de la potence dans la colonne de guidage est réalisé au moyen d'une vis sans fin non visible sur cette figure car située verticalement à l'intérieur de la colonne de guidage. La vis sans fin est entrainée par un moteur 11. L'entrainement de la vis sans fin dans un premier sens de rotation entraine la montée de la potence alors que son entrainement en rotation en sens inverse entraine la descente de la potence. Le déplacement de la potence dans la colonne de guidage peut être réalisé par tout autre moyen, par exemple par un vérin ou un moteur linéaire.

Sur la figure 6, la potence est représentée dans sa position haute dans laquelle un fût de colle peut être mis en place. Une fois qu'un un fût ouvert est placé dans le système de dépose de fluide visqueux, la potence 79 est abaissée par la mise en rotation de la vis sans fin jusqu'à ce que le plateau suiveur 4 vienne en contact avec la colle. Une fois le plateau suiveur en contact avec la colle, le déplacement vers le bas de la potence permet d'exercer une pression sur la colle pour provoquer son transfert.

En maintenant la pression au-delàs d'un certain seuil, un déplacement complémentaire de la potence permet de comprimer les rondelle Belleville. Ce déplacement complémentaire de la potence, par exemple de 100 mm, alors que le plateau suiveur et les tirants 56 sont immobiles en raison de l'incompressibilité de la colle, entraine un déplacement relatif des tubes de guidage 52 par rapport aux tirants 56, les tirants remontant à l'intérieur des tubes de guidage, et une compression des rondelles Belleville 73 par les bagues de guidage 564 faisant office de d'élément de compression 564 permettant une accumulation d'énergie.

Le transfert de colle depuis le fût vers la ligne de distribution provoque la descente du niveau de colle et en conséquence la descente du plateau suiveur. Les rondelles élastiques restituent alors l'énergie accumulée au rythme de la descente des tirants dans les tubes de guidage.

De manière similaire à ce qui a été décrit pour l'exemple qui ne fait pas partie de l'invention, des détecteurs de position et des repères solidaires des tirants permettent de contrôler les phases d'accumulation et de restitution d'énergie, chaque phase d'accumulation correspondant à une descente complémentaire de la potence.

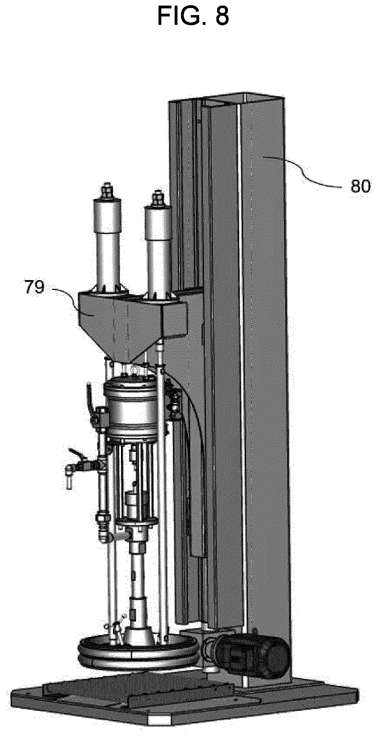

Sur la figure 8, la potence 79 est représentée en position basse sur la colonne 80 de guidage, celle que prend la potence lorsque le fût est vide (le fût n'est pas représenté pour plus de clarté).

## Revendications

1. Dispositif (1) de mise sous pression d'un fluide visqueux contenu dans un fût (2) présentant une extrémité supérieure ouverte (20), le dispositif comprend une base (3) agencée pour recevoir le fût (2) et un plateau suiveur (4) mobile verticalement suivant un axe perpendiculaire à ladite base (3) et passant par le centre du fût (2) lorsque celui-ci est sur la base (3), ledit plateau suiveur (4) :
- est porté par un système support (5) motorisé et est mobile entre une première position à l'extérieur du fût (2) et une deuxième position dans le fût pour exercer une pression sur le fluide visqueux,
- est configuré pour avoir les mêmes dimensions que l'ouverture (20) du fût de sort que lorsque le plateau suiveur (4) est dans le fût (2), son périmètre ferme étanchement le fût,
- présente un orifice de transfert (41) destiné à être relié à un moyen de pompage (6) apte à transférer le fluide sous pression, le dispositif (1) comprenant en outre un moyen élastique (7) d'accumulation et de restitution d'énergie relié au système de support (5), ledit moyen étant apte à accumuler l'énergie lorsqu'il est compressé sous l'effet de la pression exercée par le système support (5) lorsque la pression du plateau suiveur (4) sur le fluide visqueux est supérieure à un certain seuil prédéterminé et à la restituer au plateau suiveur (4) lorsqu'il est décompressé pour maintenir en pression le fluide visqueux pendant que le système support est au repos,
le système support (5) comprend :
- une potence (79) montée mobile dans une colonne (80) de guidage,
- deux tubes de guidage (52) verticaux fixés chacun à la potence (79) par une extrémité inférieure (560) comprenant un moyen de guidage (561) fixe,
- deux tirants (56) présentant chacun une partie supérieure (562) insérée dans l'un des tubes (52) via le moyen de guidage (561) fixe et une partie inférieure (563) à l'extérieure du tube (52) reliée au plateau suiveur (4),
- un moyen de déplacement de la potence (79) dans la colonne (80) de guidage par un mouvement de translation vertical de sorte à déplacer le plateau suiveur (4) entre la première et la deuxième position,
le moyen d'accumulation et de restitution d'énergie comprend :
- un élément de compression (564) monté sur la partie supérieure (562) d'un tirant (56),
- un élément élastique (73) agencé dans le tube (52) entre l'élément de compression (564) et une butée (565) fixe par rapport au tube, ladite butée étant plus proche de l'extrémité inférieure (560) que l'élément de compression (564), et
- des moyens de contrôle (75) aptes à enclencher et à stopper la compression de l'élément élastique par l'élément de compression.

2. Dispositif (1) de mise sous pression selon la revendication précédente, dans lequel les moyens de contrôle (75) comprennent un premier détecteur (750) et un premier repère (752) pour déclencher la mise en accumulation d'énergie et un deuxième détecteur (751) et un deuxième repère (753) pour arrêter l'accumulation d'énergie.

3. Dispositif (1) de mise sous pression selon l'une des revendications précédentes dans lequel l'élément élastique (73) comprend un ressort et/ou des rondelles Belleville.

4. Dispositif selon l'une des revendications précédentes, dans lequel la base comprend des moyens de fixation de fût.

5. Station de transfert de fluide visqueux, comprenant :
- un dispositif (1) de mise sous pression selon l'une des revendications précédentes ; et
- un moyen de pompage (6) relié à l'orifice (41) du plateau suiveur (4).

6. Station de transfert de fluide visqueux selon la revendication précédente, dans laquelle le moyen de pompage est une pompe pneumatique (6) solidaire avec le plateau suiveur (4).

7. Système de dépose de fluide visqueux comprenant :
- une station de transfert de fluide selon l'une des revendications 5 ou 6;
- une pompe de dosage ;
- des tuyaux d'alimentation ; et
- un système d'extrusion de fluide.

## Patentansprüche

1. Vorrichtung (1) zum Druckbeaufschlagen eines viskosen Fluids, das in einem Zylinder (2), das ein offenes oberes Ende (20) aufweist, enthalten ist, wobei die Vorrichtung eine Basis (3), die zum Aufnehmen des Zylinders (2) angeordnet ist, und eine Folgeplatte (4), die entlang einer Achse vertikal beweglich ist, die senkrecht zu der Basis (3) ist und durch die Mitte des Zylinders (2) verläuft, wenn dieser auf der Basis (3) ist, umfasst, wobei die Folgeplatte (4):
- durch ein motorisiertes Stützsystem (5) getragen ist und zwischen einer ersten Position außerhalb des Zylinders (2) und einer zweiten Position in dem Zylinder zum Ausüben eines Drucks auf das viskose Fluid beweglich ist,
- zum Vorweisen der gleichen Abmessungen wie die Öffnung (20) des Zylinders konfiguriert ist, sodass die Folgeplatte (4) in dem Zylinder (2) ist, wobei ihr Umfang den Zylinder abdichtet,
- eine Übertragungsöffnung (41) aufweist, die dafür vorgesehen ist, mit einem Pumpmittel (6) verbunden zu werden, das geeignet ist, um das druckbeaufschlagte Fluid zu übertragen,
die Vorrichtung (1) ferner umfassend ein elastisches Mittel (7) für die Speicherung und Rückgabe von Energie, das mit dem Stützsystem (5) verbunden ist, wobei das Mittel geeignet ist, um Energie zu speichern, wenn es unter der Wirkung des durch das Stützsystem (5) ausgeübten Drucks komprimiert wird, wenn der Druck der Folgeplatte (4) auf das viskose Fluid größer als eine gewisse zuvor bestimmte Schwelle ist, und sie an die Folgeplatte (4) zurückzugeben, wenn es zum Halten des viskosen Fluids unter Druck dekomprimiert wird, während das Stützsystem in Ruhestellung ist,
wobei das Stützsystem (5) umfasst:
- einen Träger (79), der in einer Führungssäule (80) beweglich montiert ist,
- zwei vertikale Führungsrohre (52), die jeweils an dem Träger (79) durch ein unteres Ende (560) befestigt sind, umfassend ein festes Führungsmittel (561),
- zwei Zugstangen (56), die jeweils einen oberen Teil (562), der in eines der Rohre (52) über das feste Führungsmittel (561) eingeführt wird, und einen unteren Teil (563) außerhalb des Rohrs (52) aufweisen, der mit der Folgeplatte (4) verbunden ist,
- ein Mittel für die Verschiebung des Trägers (79) in der Führungssäule (80) durch eine vertikale Translationsbewegung, um die Folgeplatte (4) zwischen der ersten und der zweiten Position zu verschieben,
das Mittel für die Speicherung und Rückgabe von Energie umfasst:
- ein Kompressionselement (564), das auf dem oberen Teil (562) einer Zugstange (56) montiert ist,
- ein elastisches Element (73), das in dem Rohr (52) zwischen dem Kompressionselement (564) und einem festen Anschlag (565) relativ zu dem Rohr angeordnet ist, wobei der Anschlag näher an dem unteren Ende (560) als das Kompressionselement (564) ist, und
- Steuermittel (75), die geeignet sind, um die Kompression des elastischen Elements durch das Kompressionselement einzuschalten und zu stoppen.

2. Druckbeaufschlagungsvorrichtung (1) nach dem vorstehenden Anspruch, wobei die Steuermittel (75) einen ersten Detektor (750) und eine erste Markierung (752) zum Auslösen der Energiespeicherung und einen zweiten Detektor (751) und eine zweite Markierung (753) zum Anhalten der Energiespeicherung umfassen.

3. Druckbeaufschlagungsvorrichtung (1) nach einem der vorstehenden Ansprüche, wobei das elastische Element (73) eine Feder und/oder Tellerfedern umfasst.

4. Vorrichtung nach einem der vorstehenden Ansprüche, wobei die Basis Mittel zum Befestigen des Zylinders umfasst.

5. Station zum Übertragen viskoser Fluide, umfassend:
- eine Druckbeaufschlagungsvorrichtung (1) nach einem der vorstehenden Ansprüche; und
- ein Pumpmittel (6), das mit der Öffnung (41) der Folgeplatte (4) verbunden ist.

6. Station zum Übertragen viskoser Fluide nach dem vorstehenden Anspruch, wobei das Pumpmittel eine pneumatische Pumpe (6) ist, die mit der Folgeplatte (4) fest verbunden ist.

7. System zum Abgeben viskoser Fluide, umfassend:
- eine Station zum Übertragen von Fluid nach einem der Ansprüche 5 oder 6;
- eine Dosierpumpe;
- Versorgungsröhren; und
- ein Fluidextrusionssystem.

## Claims

1. Device (1) for pressurizing a viscous fluid contained in a drum (2) having an open upper end (20), the device comprises a base (3) arranged to receive the drum (2) and a follower plate (4) which is vertically movable along an axis which is perpendicular to said base (3) and passing through the center of the drum (2) when the drum is on the base (3), said follower plate (4):
- is supported by a motorized support system (5) and is movable between a first position outside the drum (2) and a second position inside the drum to exert pressure on the viscous fluid,
- is configured to have the same dimensions as the drum opening (20), so that when the follower plate (4) is in the drum (2) its perimeter seals the drum,
- has a transfer port (41) intended to be connected to a pumping means (6) which is capable of transferring the pressurized fluid,
the device (1) further comprising a resilient means (7) for energy storage and restoration which is connected to the support system (5), said means being capable of storing energy when it is compressed under the effect of the pressure exerted by the support system (5) when the pressure of the follower plate (4) on the viscous fluid is greater than a certain predetermined threshold and to restore the energy to the follower plate (4) when it is decompressed in order to maintain the pressure of the viscous fluid while the support system is at rest,
the support system (5) comprises:
- a bracket (79) which is movably mounted in a guide column (80),
- two vertical guide tubes (52) each attached to the bracket (79) by a lower end (560) comprising a fixed guide means (561),
- two tie rods (56) each having an upper portion (562) inserted into one of the tubes (52) via the fixed guide means (561) and a lower portion (563), outside the tube (52), which is connected to the follower plate (4),
- a means for moving the bracket (79) in the guide column (80) by a vertical translation movement so as to move the follower plate (4) between the first position and the second position,
the energy storage and restoration means comprises:
- a compression element (564) mounted on the upper portion (562) of a tie rod (56),
- a resilient element (73) arranged in the tube (52) between the compression element (564) and a stop (565) fixed with respect to the tube, said stop being closer to the lower end (560) than the compression element (564), and
- control means (75) for starting and stopping compression of the resilient element by the compression element.

2. Pressurizing device (1) according to the preceding claim, wherein the control means (75) comprise a first detector (750) and a first marker (752) for triggering energy storage and a second detector (751) and a second marker (753) for stopping energy storage.

3. Pressurizing device (1) according to one of the preceding claims, wherein the resilient element (73) comprises a spring and/or Belleville washers.

4. Device according to one of the preceding claims, wherein the base comprises drum attachment means.

5. Viscous fluid transfer station, comprising:
- a pressurizing device (1) according to one of the preceding claims; and
- a pumping means (6) connected to the port (41) of the follower plate (4).

6. Viscous fluid transfer station according to the preceding claim, wherein the pumping means is a pneumatic pump (6) which is secured to the follower plate (4).

7. Viscous fluid dispensing system comprising:
- a fluid transfer station according to one of claims 5 or 6;
- a dosing pump;
- feed pipes; and
- a fluid extrusion system.
